# EUROPEAN PATENT APPLICATION

(11) **EP 4 531 343 A1**
(43) Date of publication of application: **02.04.2025**
(21) Application number: 24202454.5
(22) Date of filing: 25.09.2024
(51) Int. Cl.: H04L 9/40

(54) **METHODS FOR SECURITY CONTROL AND DEVICES THEREOF**

(30) Priority: 29.09.2023 US 202318375027
(71) Applicant: F5, INC., Seattle, WA 98104 (US)
(72) Inventor: TIRUVAIPETA, Vinay Kumar, Hyderabad (IN)
(74) Representative: Savi, Massimiliano

(57) **Abstract**

Methods, non-transitory computer readable media, network traffic manager apparatuses, and systems that facilitate network security are disclosed. The method includes evaluating a security risk of a transaction and determining a risk metric for the transaction based on the evaluation. Based on the risk metric, the method further includes determining a data access right for the transaction. Then the method includes directing the transaction to a target application entity based on the data access right of the transaction.

## Description

### FIELD

This disclosure relates to security control, in particular, to security control in a network traffic management system.

### BACKGROUND

As the development of various wired and wireless technologies, communication technologies are propelling the world towards a progressively interconnected and networked society. The swift expansion of mobile communications and technological advancements have render greater demand for enhanced network service capacity and connectivity. Additionally, factors such as reliability, efficiency, safety, robustness, and latency play an important role to meet different needs in various communication scenarios. Given the escalating demand for cybersecurity whereas persistently rising number of attacks leading to information leakage, a better protection of data in various transactions via a network is desired.

### SUMMARY

This disclosure is directed to methods and devices related to security control. More specifically, the methods and devices relate to implement security control on an intermediate network entity sitting in front of servers in a network traffic management system. Relevant non- transitory computer readable medium and network traffic management system are also disclosed.

According to an aspect of the disclosure, a method for security control is disclosed. The method may be implemented by a network traffic management system, wherein the network traffic management system may comprise one or more network traffic management apparatuses, client devices, or server devices. The method may comprise evaluating a security risk of a transaction and determining a risk metric for the transaction based on the evaluation. The method may further comprise determining a data access right for the transaction based on the risk metric. The method may further comprise directing the transaction to a target application entity based on the data access right of the transaction.

According to another aspect of the disclosure, an apparatus for security control is disclosed. The apparatus may comprise memory comprising programmed instructions stored in the memory and one or more processors configured to be capable of executing the programmed instructions stored in the memory to: evaluate a security risk of a transaction and determine a risk metric for the transaction based on the evaluation. The one or more processors may further determine a data access right for the transaction based on the risk metric. The one or more processors may further direct the transaction to a target application entity based on the data access right of the transaction.

According to another aspect of the disclosure, a non-transitory computer readable medium is disclosed. The non-transitory computer readable medium may have stored thereon instructions for security control, comprising executable code which when executed by one or more processors, causes the one or more processors to evaluate a security risk of a transaction, and determine a risk metric for the transaction based on the evaluation. The executable code may further cause the one or more processors to determine a data access right for the transaction based on the risk metric and direct the transaction to a target application entity based on the data access right of the transaction.

According to another aspect of the disclosure, a network traffic management system comprising one or more traffic management apparatuses, server devices, or client devices is disclosed. The network traffic management system may comprise memory comprising programmed instructions stored thereon and one or more processors configured to be capable of executing the stored programmed instructions to: evaluate a security risk of a transaction and determine a risk metric for the transaction based on the evaluation. The one or more processors may further determine a data access right for the transaction based on the risk metric and direct the transaction to a target application entity based on the data access right of the transaction.

With implementations of the above and operations that will be discussed below, undesired, or malicious network traffic may be detected before such traffic being forwarded to a server. Accordingly, security of the network environment may be improved. The detected undesired or malicious traffic may be treated differently and therefore processing loads on the servers may also be adjusted. From this aspect, an improved load balancing may also be achieved. Also, security policies of the network may be improved or updated based on an interception and further analysis of undesired network traffic.

The above and other aspects and their implementations are described in greater detail in the drawings, the descriptions, and the claims below.

### BRIEF DESCRIPTION OF THE DRAWINGS

The foregoing and other aspects of the present disclosure are best understood from the following detailed description when read in connection with the accompanying drawings. For the purpose of illustrating the invention, specific examples are shown in the drawings, it being understood, however, that the invention is not limited to the specific instrumentalities disclosed. Included in the drawings are the following Figures:
FIG. 1 illustrates an exemplary network traffic management system;
FIG. 2 illustrates an exemplary execution environment of a network traffic management apparatus;
FIGS. 3 illustrates an exemplary block diagram of a network traffic management apparatus;
FIG. 4 illustrates a flow diagram of an exemplary method for executing a security control on a network traffic management apparatus;
FIG. 5 illustrates an exemplary data access rights determined by a network traffic management apparatus;
FIG. 6 illustrates an exemplary execution environment for implementing a security control by a network traffic management apparatus; and
FIG. 7 illustrates another exemplary execution environment for implementing a security control by a network traffic management apparatus.

### DETAILED DESCRIPTION

The present disclosure may be understood more readily by reference to the following detailed description of exemplary examples. Before the exemplary implementations and examples of the methods, devices, and systems according to the present disclosure are disclosed and described, it is to be understood that implementations are not limited to those described within this disclosure. Numerous modifications and variations therein will be apparent to those skilled in the art and remain within the scope of the disclosure. It is also to be understood that the terminology used herein is for describing specific implementations only and is not intended to be limiting. Some implementations of the disclosed technology will be described more fully hereinafter with reference to the accompanying drawings. This disclosed technology may, however, be embodied in many different forms and should not be construed as limited to the implementations set forth therein.

In the following description, numerous specific details are set forth. But it is to be understood that embodiments of the disclosed technology may be practiced without these specific details. In other instances, well-known components, structures, and techniques have not been shown in detail in order not to obscure an understanding of this description. References to "an implementation," "an example," "some examples," etc., indicate that the implementation(s) of the disclosed technology so described may include a particular feature, structure, or characteristic, but not every implementation necessarily includes the particular feature, structure, or characteristic. Further, repeated use of the phrase "in some examples" does not necessarily refer to the same implementation, although it may. Additionally, it is to be understood that particular features, structures, or characteristics that described in different examples, implementations or the like, may be further combined in various ways and being implemented in one or more implementations.

A network traffic management system may relate to a set of tools, processes, devices, and relevant technologies to control and optimize data flow within a computer network. Such network traffic management system may monitor, analyze, control and balance network traffic to maintain the performance and reliability of a computer network (e.g., make sure critical applications and services receive the necessary bandwidth or network resources are utilized efficiently). A network traffic management system may be implemented in various network topologies. Specific devices utilized and topologies designed in a network environment may depend on specific requirements and the scale of the network. Factors may include such as the size of the network, its geographic spread, the types of applications and services being offered, the organization's traffic management requirements, etc. For example, the network traffic management system may be implemented in a centralized, distributed, or cloud-based topology in various networks. The networks may include Local Area Networks (LAN), Wide Area Networks (WAN), data center networks, cloud networks, hybrid networks, or any appropriate existing networks or the ones that may be developed in the future. Various devices may be involved in the network traffic management system, depending on the specific network and topology being used. For example, edge routers or switches, firewalls, proxies, load balancers, Content Delivery Network (CDN) servers, application servers, etc. may be included in a network traffic management system.

A security control may refer to one or more operations to detect an undesired or malicious request from a plurality of incoming network traffic. The undesired or malicious request may relate to requesting a transaction during which data or information may be transmitted to a device whose user may lack an authority to access to the transmitted information.

A security risk may relate to, but not limited to, the security of a source from where the request was initiated, the sensitivity of data to be accessed regarding the requested transaction, the nature and sensitivity of the requested transaction itself, etc. A security risk may include or relate to any feature or characteristic that indicate a potential risk or issue if the requested transaction is allowed and executed.

A transaction may refer to a communication process between two or more parties or entities, wherein all the parties may play the role of a sender and a receiver simultaneously. Therefore, a transaction may be a series of interactions for message or information transmission to perform a specific task or operation. In this disclosure, a transaction may include any interactions between a client device and a server of a network traffic management system, during which data maintained in the network may be exposed to or accessed by the client device. A request undergoes a security control in this disclosure may request for execution of a transaction between the client device and a server or may be itself is a start or a part of an ongoing transaction (e.g., already initiated at the client device).

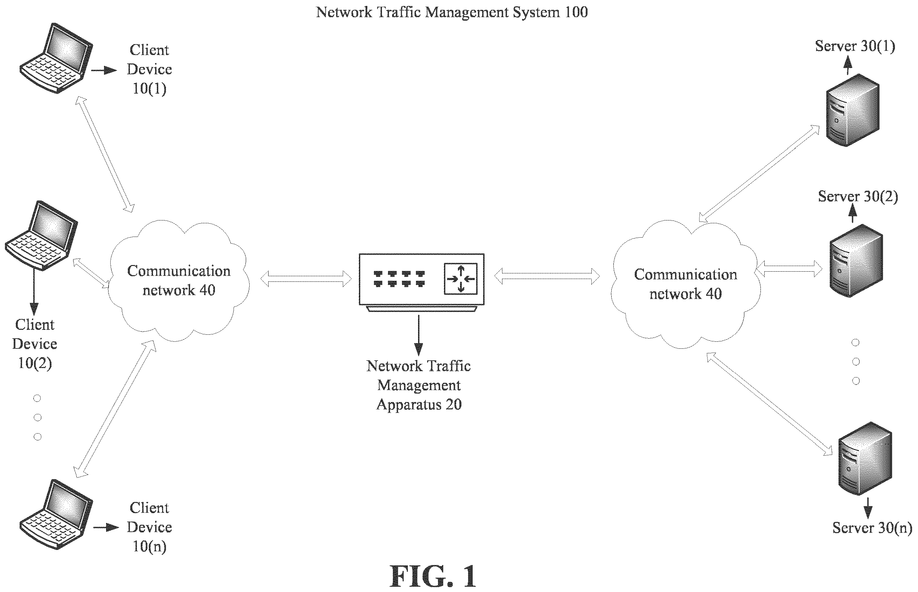

FIG. 1 illustrates an exemplary simplified network traffic management system 100 according to an example of this disclosure. As illustrated in FIG. 1, the network traffic management system 100 may comprise a plurality of client devices 10(1)-10(n), one or more network traffic management apparatus 20, and a plurality of servers 30(1)-30(n) serving the client devices 10(1)-10(n). The client device 10, the network traffic management apparatus 20, and server 30 may communicate with each other via one or more communication network 40. The communication network 40 may be any appropriate type and number of networks that provide a network connectivity. For example, communication network 40 may be one or more wired or wireless public or private networks, based on any industry-standard protocols (e.g., 3G, 4G, 5G, etc.).

Referring to FIG. 1, the client device 10 may send a request to the server 30 to access certain content or service (e.g., a web application). The client device 10 may also be referred to as a "client," "user equipment," or "user equipment device," which may include but is not limited to a mobile phone, smartphone, tablet, laptop computer, a smart electronics, a wearable device, a video surveillance device, an industrial wireless sensors, or appliance including an air conditioner, a television, a refrigerator, an oven and the like, or other devices that are capable of communicating wirelessly over a network. Moreover, the client device 10 may also be a proxy or a server or any network devices, which may send above discussed request to the server 30 on behalf of a user equipment. For example, the client device 10 may be a proxy (e.g., a forward proxy) of a private network, which forwards a request message that it received from a client device isolated within the private network. In this way, the proxy sends a request message on behalf of the isolated device and allows it to be served by server 30. In this scenario, the proxy plays the role of client device 10 in the network traffic management system 100 as illustrated in FIG. 1.

Referring again to FIG. 1, the network traffic management apparatus 20 may receive the request message sent from the client device 10, which may request for executing a transaction with a server 30. The servers 30 may have different storage capacities and/or acceleration capabilities. Therefore, the network traffic management apparatus 20 may choose a corresponding server 30 and further send the request sent from the client device 10 to the server 30. The network traffic management apparatus 20 may be any network device that capable of handling incoming traffic or messages. Then the network traffic management apparatus 20 may distribute incoming network messages and application traffic across the multiple servers 30(1)-(n) illustrated in FIG. 1. The network traffic management apparatus 20 may be, for example, a load balancer, a firewall, a proxy server, etc. implemented as a physical hardware device, a software device, or a firmware or any combination thereof.

Take a load balancer as an example, various types of load balancer may be used, such as network load balancing, HTTP(S) load balancing, internal load balancing, etc. Network load balancing may leverage network layer information to decide where to send network traffic. This load balancing is accomplished through layer 4 and is designed to handle all forms of TCP/UDP traffic. HTTP(S) load balancing operates in the application layer and therefore may make a distribution decision based on any information that comes with an HTTP address. Internal load balancing is similar as network load balancing but can further be leveraged to balance internal infrastructure. To balance the processing loads on the servers 30(1)-(n), the network traffic management apparatus 20 may use different load balancing methods, for example, Round Robin, IP Hash, Least Connections, Least Response Time, or Least Bandwidth. The Round Robin method relies on a rotation system to sort network and application traffic. In the Round Robin method, an incoming request is delegated to the first available server, and then the server is bumped to the bottom of the line. In the IP Hash method, the client device's IP address determines which server receives its request. The Least Connections method directs traffic to whichever server has the least number of active connections. This may be helpful during heavy traffic periods, as an even distribution among all available servers may be maintained. The Least Response Time method directs traffic to a server with the least number of active connections and lowest average response time. The Least Bandwidth method measures traffic in megabits (Mbps) per second and sends a client request to a server with the least Mbps of traffic.

Referring to FIG. 1, server 30 may respond to the client device 10 and have one or more interactions with the client device 10 to provide the requested service or data, when receiving the client device 10's request via the network traffic management apparatus 20. The servers 30(1)-(n) may be any types of servers to serve a client device. For example, the servers 30(1)-(n) may be application servers that run applications, manage, and execute various tasks related to the processing of user device's requests within the network environment. A server may be a combination of integrated software components and an allocation of computational resources, such as memory, a computing device, and processes on the computing device for executing the integrated software components. The combination of the software and computational resources may provide a particular type of function. The server may take the form of hardware, software, firmware, or any combination thereof. For example, a server 30 may be implemented as a plug-in circuit card that interfaces to an input/output or peripheral interface (such as Peripheral Component Interconnect Express (PCIe)) of a computer and can include a connector for connecting to a backplane or other connector of the computer. As another example, a server 30 may be implemented as a computer appliance that is connected over a computer network. As another example, a server 30 may be implemented as a virtualized resource within a cloud-computing infrastructure. Moreover, a server may refer to either the combination of components on one or more computers, or the one or more computers. Specifically, a server may include multiple servers providing the same or different functionality to the same or different set of clients at the same or different network segment(s). For example, a server may be a cluster of servers, server entities, server instances or server engines.

In the network environment illustrated in FIG. 1, normally a network traffic management apparatus 20 does not detect whether a request is a legitimate one. For example, whether this request is initiated from a legitimate user or an attacking source. As another example, the requested transaction may be beyond the sending user's authorization, although the request is sent from a legitimate user. In this scenario, the request may involve a risky transaction. Because the network traffic management apparatus 20 sends a request to a server 30 without detecting whether a requested or ongoing transaction has a potential risk, the server may respond to all the received request in the same way. This means a server may serve all the client devices, no matter whether a client device is used by an attacker or a legitimate user. Therefore, an attacker or non-legitimate user is treated in the same way as a legitimate user. This may expose sensitive data to a potential risk of being leaked to an unauthorized user. In addition, limited resources (*e.*g., processing capabilities or loads) of the servers 30(1)-(n) may be spent on some transactions initiated by attackers, which is a waste of resource. Therefore, it'll be good to impose some security control at the network traffic management apparatus 20, before a request being sent to a server 30.

It is to be understood that FIG. 1 illustrates an exemplary simplified network traffic management system 100 to which many variations may be made. For example, other types and numbers of systems, devices, components, and elements in other topologies may be used to add into the illustrated system or replace any part of the system. Furthermore, one or more of the components depicted in the network traffic management system 100, such as the network traffic management apparatus 20 and the servers 30, may be configured to operate as virtual instances on the same or different physical machine. In this way, in some scenarios, one or more of network traffic management apparatus 20 and the servers 30 may operate on the same physical device rather than as separate devices communicating through a communication network 40 as illustrated in FIG. 1. Similarly, one network traffic management apparatus 20 and/or one server 30 may operate on more than one physical device and communicatively connected with the rest parts or components of the network traffic management apparatus 20 and/or one server 30 via a communication network 40 as shown in FIG. 1.

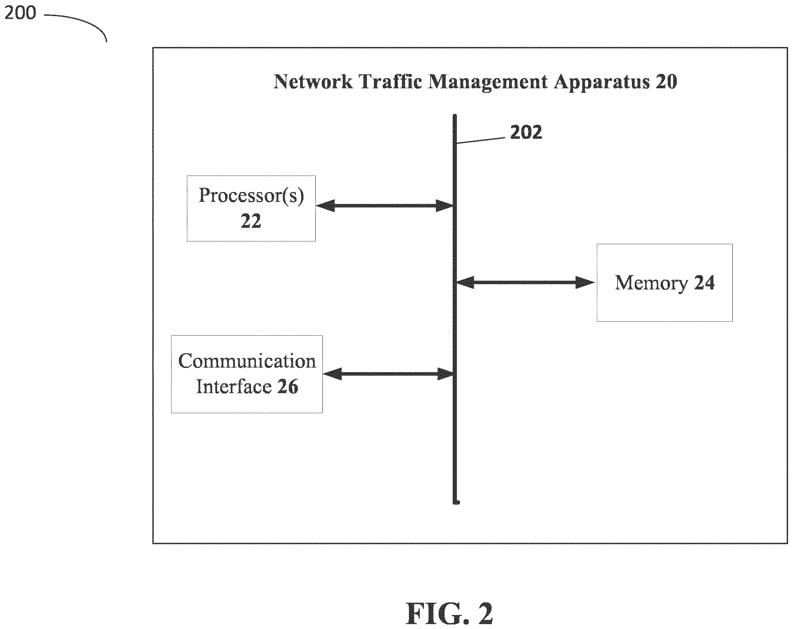

FIG. 2 shows an exemplary execution environment 200 of the network traffic management apparatus 20. In the execution environment 200, the network traffic management apparatus 20 may include processor(s) 22, a memory 24, a communication interface 26 and/or other circuitries, which are coupled together by a bus 202 or other communication link. It is to be understood that the network traffic management apparatus 20 may include other types and/or numbers of elements in other configurations. The processor(s) 22 of the network traffic management apparatus 20 may execute programmed instructions stored in the memory 24 of the network traffic management apparatus 20 for any number of the functions identified in this disclosure. The processor(s) 22 of the network traffic management apparatus 20 may include one or more central processing units (CPU) or general purpose processors with one or more processing cores, for example, although other types of processor(s) can also be used. The communication interfaces 26, which may support wireless, e.g. Bluetooth, Wi-Fi, WLAN, cellular (4G, LTE/A, 5G), and/or wired, Ethernet, Gigabit Ethernet, optical networking protocols. The communication interfaces 26 may also include serial interfaces, such as universal serial bus (USB), serial ATA, IEEE 1394, lighting port, I2C, slimBus, or other serial interfaces. In some examples, the execution environment 200 may further include power functions and various input interfaces (not shown in FIG. 2). In some examples, the execution environment may further include a user interface that may include human-to-machine interface devices and/or graphical user interfaces (GUI).

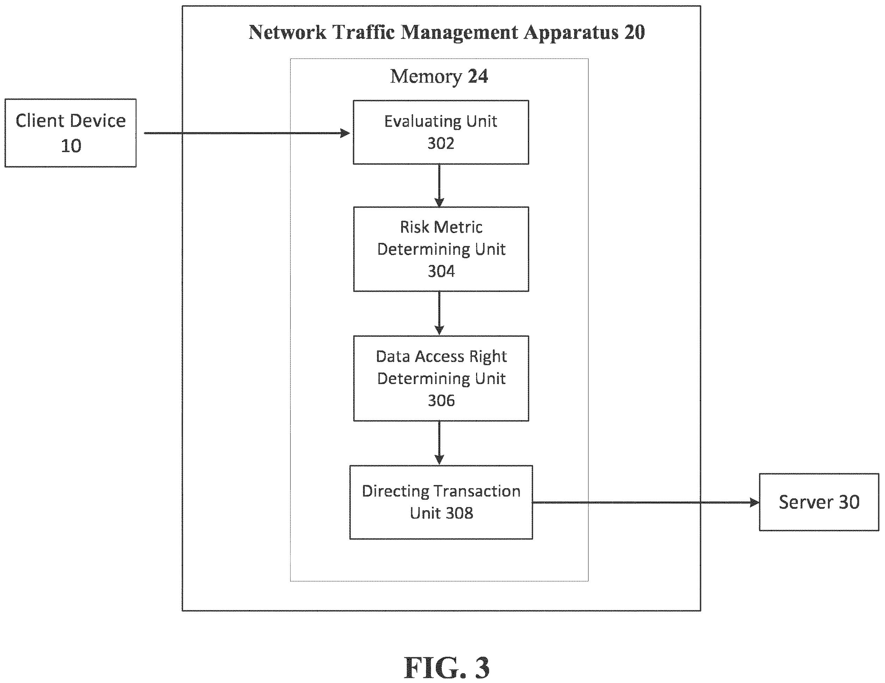

The memory 24 of the network traffic management apparatus 20 may store these programmed non-transitory computer-readable instructions for one or more aspects of the technology as described and illustrated herein, although some or all of the programmed instructions could be stored elsewhere. A variety of different types of memory storage devices, such as random access memory (RAM), read only memory (ROM), Hard Disk Drive (HDD), solid state drives, flash memory, Erasable Programmable Read Only Memory (EPROM), or other computer readable medium such as magnetic or optical disc (e.g., Compact Disc Read Only Memory (CD-ROM)) which is read from and written to by a magnetic, optical, or other machine-readable medium that is coupled to the processor(s) 22, may be used as the memory 24. Accordingly, the memory 24 of the network traffic management apparatus 20 may store application(s) that can include computer executable instructions that, when executed by the network traffic management apparatus 20, cause the network traffic management apparatus 20 to perform actions or operations, such as to transmit, receive, or otherwise process messages, for example, and to perform other actions or operations described and illustrated below with reference to FIGs. 3-6. An application may be implemented as a unit, module, component, instance, or engine of other applications and/or operating system extensions, plugins, or the like. The application(s) can be executed within or as virtual machine(s) or virtual server(s) that may be managed in a cloud-based computing environment, without being tied to one or more specific physical network computing devices.

The methods, devices, processing, circuitry, and logic described below may be implemented in many different ways and in many different combinations of hardware, software, firmware, or combination thereof. For example, all or parts of the implementations may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples.

Accordingly, the circuitry may store or access instructions for execution, or may implement its functionality in hardware alone. The instructions may be stored in a tangible storage medium (e.g., memory 24) that is other than a transitory signal. A product, such as a computer program product, may include a storage medium and instructions stored in or on the medium, and the instructions when executed by the circuitry in a device may cause the device to implement any of the processing described above or illustrated in the drawings.

The implementations discussed herein may be distributed. For instance, the circuitry may include multiple distinct system components, such as multiple processors and memories, and may span multiple distributed processing systems. Parameters, databases, and other data structures may be separately stored and managed, may be incorporated into a single memory or database, may be logically and physically organized in many different ways, and may be implemented in many different ways. Example implementations include linked lists, program variables, hash tables, arrays, records (*e*.*g*., database records), objects, and implicit storage mechanisms. Instructions may form parts (*e*.*g*., subroutines or other code sections) of a single program, may form multiple separate programs, may be distributed across multiple memories and processors, and may be implemented in many different ways. Example implementations include stand-alone programs, and as part of a library, such as a shared library like a Dynamic Link Library (DLL). The library, for example, may contain shared data and one or more shared programs that include instructions that perform any of the processing described above or illustrated in the drawings, when executed by the circuitry.

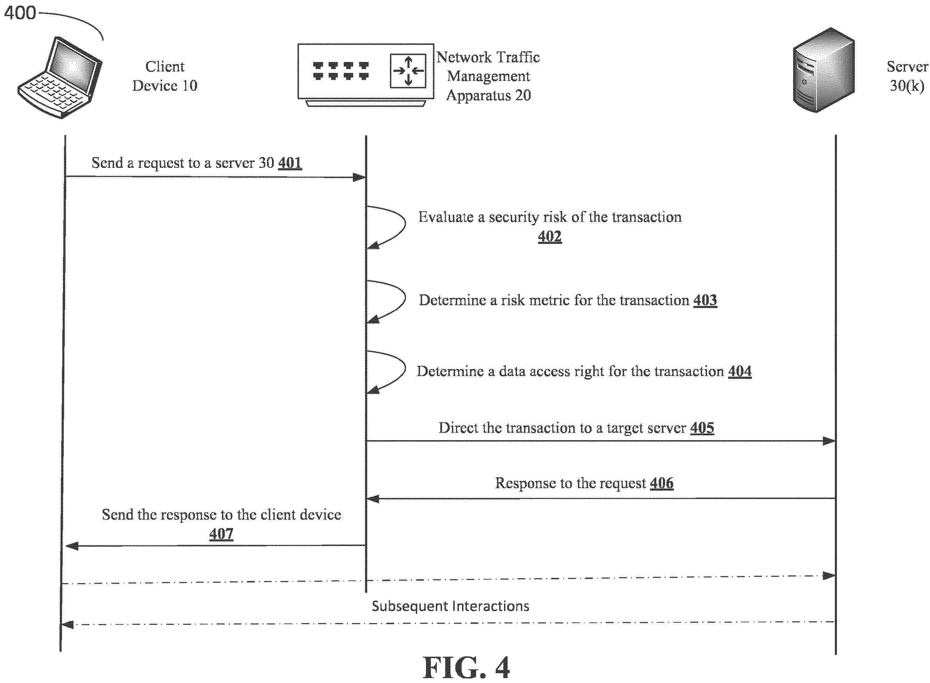

Referring to FIG. 3, an exemplary block diagram of the network traffic management apparatus 20 to perform a security control is illustrated. In FIG. 3, the network traffic management apparatus may include an evaluating unit 302, a risk metric determining unit 304, a data access right determining unit 306, and a directing transaction unit 308. Operations performed by the plurality of units will be described in conjunction with the flow diagram illustrated in FIG. 4.

The term "unit" (and other similar terms such as module, submodule, etc.) may refer to computing software, firmware, hardware, and/or various combinations thereof. At a minimum, however, units are not to be interpreted as software that is not implemented on hardware, firmware, or recorded on a non-transitory processor readable recordable storage medium. Indeed, "unit" is to be interpreted to include at least some physical, non-transitory hardware such as a part of a processor, circuitry, or computer. Two different units may share the same physical hardware (*e*.*g*., two different units can use the same processor and network interface). The units described herein can be combined, integrated, separated, and/or duplicated to support various applications. Also, a function described herein as being performed at a particular unit can be performed at one or more other units and/or by one or more other devices instead of or in addition to the function performed at the particular unit. Further, the units can be implemented across multiple devices and/or other components local or remote to one another. Additionally, the units can be moved from one device and added to another device, and/or can be included in both devices. The units can be implemented in software stored in memory or non-transitory computer-readable medium. The software stored in the memory or medium can run on a processor or circuitry (e.g., ASIC, PLA, DSP, FPGA, or any other integrated circuit) capable of executing computer instructions or computer code. The units can also be implemented in hardware using processors or circuitry on the same or different integrated circuit.

FIG. 4 illustrates a flow diagram of an exemplary process 400 for executing a security control on the network traffic management apparatus 20. In the following, steps illustrated in FIG. 4 will be described in conjunction with the logic of the network traffic management apparatus 20 shown in FIG. 3.

At step 401, a client device 10 may send a request to a server 30 via the communication network 40. In an example, a client device 10 may initiate such request via a browser to access a specific web application offered by a server 30. Depending on the network topology, the request may pass through a plurality of network devices or servers (*e*.*g*., a firewall server, an intrusion detection device, etc.). Then the request may be received by the network traffic management apparatus 20.

At step 402, in response to receiving the request, the network traffic management apparatus 20 may forward this request to a server 30 which is capable of serving the client device 10 (*e*.*g*., based on relevant routing policies or a load balancing method). As discussed above, the network traffic management apparatus 20 may be, but not limited to, such as a load balancer, a proxy server, a firewall server or engine, an application firewall, a network firewall, or an authentication server. However, to implement a security control as discussed in this disclosure, in response to receiving the request sent from the client device 10, the evaluating unit 302 of the network traffic management apparatus 20 may execute an evaluation before forwarding the received request. In this way, the network traffic management apparatus 20 may execute a security control over each transaction requested by the client device 10. The evaluating unit 302 may evaluate a security risk of a requested transaction indicated in the request. As mentioned above, a security risk may include or relate to any feature or characteristic that indicate a potential risk or issue if the requested transaction is allowed and executed. For example, a potential risk or issue may be, the request is not initiated by a legitimate user and therefore a server may respond to an attacker instead of a legitimate user. As another example, a potential risk or issue may be, if the requested transaction is executed, a server may respond to a legitimate user with data to which he or she has no authentication to access. As a further example, a potential risk or issue may be, a server may respond to a legitimate user and therefore execute a transaction without going through a more stringent authentication or verification process which is required or desired to complete before the execution. The more stringent authentication or verification process may be desired due to a nature of the requested transaction, such as the requested transaction is a high sensitive or risky transaction.

The evaluating unit 302 may consider a plurality of factors to perform the evaluation. Then the evaluating unit 302 may mark or record any abnormal or uncommon information that it noted for the risk metric determining unit 304. Factors such as security policies executed in the network environment, specific IP address or area or region where the request is originated, signatures of packets, hop number or hop count in the packet, user identity, user behavior, transaction type, etc., may be considered. To make an evaluation based on one or more of those factors, the evaluating unit 302 may work and communicate with other relevant network devices or appliances to obtain relevant information or data. Such network devices may be, for example, a Service Provider (*e*.*g*., an Access Policy Manager (APM)), an Identity Provider (such as Active Directory Federation Services (ADFS), Ping), Risk Server, etc. In some examples, in response to receiving the request from the client device 10, the evaluating unit 302 may inspect the received packet and match with pre-configured policies executed in the network environment (*e*.*g*., network traffic management system 100). The pre-configured policies may be static policies or dynamic policies. The matching may happen on layer two, layer three, layer four or any layer of the OSI 7 Layers. In some examples, the network traffic management apparatus 20 may check a signature for each packet when evaluating whether the transaction is requested by a legitimate user. In some examples, the policies or rules employed in the network environment may indicate blocking all requests coming from one or more particular IP addresses or regions. In some examples, the role of the user who sends the request via the client device 10 may be considered. In some examples, a consistency of the user who sends the request via the client device may be considered. The consistency may relate to or include, for example, whether a same client device is used, whether the request is sent during the user's normal working time or access time, whether the request is sent from the same browser or a frequently used browser, whether the request is sent from a same geographical location or area (*e*.*g*., the same IP address), the number of requests have been sent (*e*.*g*., whether the user sent significantly more requests during a certain period of time), etc.

At step 403, the risk metric determining unit 304 of the network traffic management apparatus 20 may determine a risk metric for the transaction, based on the evaluation made by the evaluating unit 302. The risk metric determining unit 304 may assign a risk metric to a transaction in various ways. For example, the risk metric determining unit 304 may calculate a value as the risk metric for each transaction. In this situation, the risk metric may be a number whose minimum value is zero and maximum value is 10 or 100 or any desired number. For example, a zero-value may indicate that a transaction is safe, while a 10 or 100 may indicate that this is a highly risky transaction, or vice versa. In some other examples, the risk metric determining unit 304 may use different colors to indicate different levels of a risk. For example, green may indicate that this transaction has a low risk or no risk, whereas red may indicate that this transaction has a high risk.

For example, in some examples, a high hop number may indicate that the packet took a long route, which means a potential risky transaction. This is because a longer route means the packet passed through multiple networks or network devices (*e.g*., routers) to get to the network traffic management device 20. This makes a detection of where the packet is coming from harder. Accordingly, as compared to a low hop count, a high hop count may indicate a potential higher risk that the packet is sent from an attacker. Therefore, the risk metric determining unit 304 may maintain a policy which specifies a packet with a hop count greater than three (or four) means a medium level or high-level risk. Then the risk metric determining unit 304 may determine a risk metric indicating a medium level or high-level risk for a transaction with a hop count greater than three (or four). Similarly, the policy may further specify a risk metric indicating an even higher-level risk being given to a packet with a hop count greater than five or six. In some examples, if a user's role is a junior level employee, however, he or she is trying to access high confidential information or data of the organization which is beyond his or her role. In this scenario, this user may be a legitimate one as he or she may be instructed to fetch such information for someone who is more senior. But it is also possible that this user is indeed trying to access some information which he or she is not authorized to access to and therefore become an unlawful user. Therefore, the risk metric determining unit 304 may assign a medium or high-risk metric to the transaction, based on the discrepancy between the user's role and the confidential level of the information to be accessed.

In some examples, the evaluation by the evaluating unit 302 may indicate that the request is not sent during the user's usual working time. For example, a user normally sends out this kind of request during 9AM to 6PM. However, this request was sent by the user at 12PM. This may be due to an attacker who is using a legitimate user's name and password and is trying to access to the system at an abnormal time as compared to the user's normal behavior (i.e., normal working time in this example). However, it may also be a situation that, the legitimate user is having a business trip or a vocation in another country. Then due to the time difference between this visiting country and the user's home country, the user's time to access the system is different. Similarly, this also result in a different original IP address. These differences lead to an uncommon user behavior, if look at the facts from the network traffic management apparatus 20's perspective, which is outside the user's normal behavior. In such situation, the risk metric determining unit 304 may determine a medium or high-risk metric for the transaction. Whether to assign a medium or high risk for the transaction may be made, when considering other facts. Other facts that may be considered include, but not limited to, such as whether the client device is the same, whether the request is sent more frequently than usual, whether the times of input wrong username or password close to or reached to an upper limit specified by a policy, etc.

At step 404, the data access right determining unit 306 of the network traffic management apparatus 20 may determine a data access right for the transaction, based on the risk metric of the transaction determined by the risk metric determining unit 304.

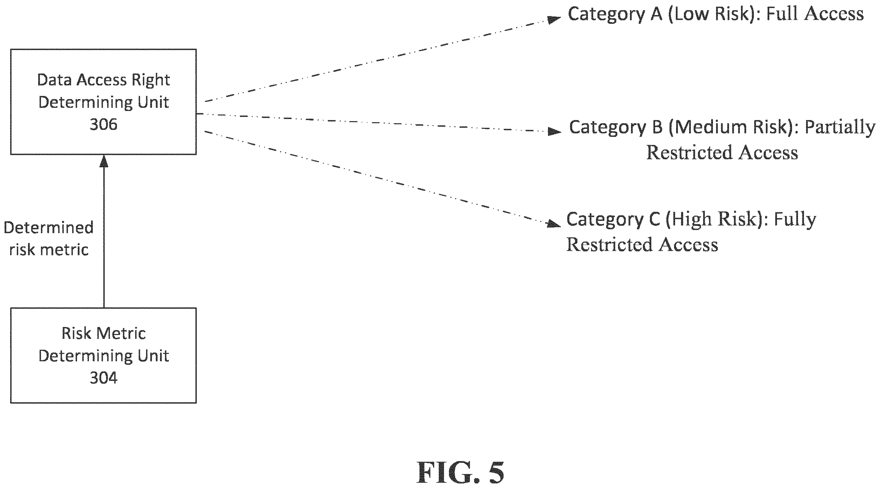

Referring to FIG. 5, as an example, the data access right determining unit 306 may maintain three categories of different access right. As illustrated in FIG. 5, category A means a transaction has a low risk. Therefore, such transaction has a fully access right to access data maintained in the network, which is relevant to the execution of the transaction. Therefore, a client device may receive a full or actual response from a server. Category B means a transaction has a medium risk. Therefore, a client device has a partially restricted or limited access right to access data maintained in the network. In this case, a client device may receive a restricted response if the requested transaction relates to data to which a user of the client device is limited or not allowed to access. Category C means a transaction has a high risk. Therefore, for such requested transaction, the user of the client device has a fully restricted access right and thereby is not allowed to access any data maintained in the network. In some examples, the full access right in category A and the fully restricted access right in category C means fully access right or fully restriction to all the data maintained in the network. In some examples, the full access right in category A and the fully restricted access right in category C may be binding to the particular requested transaction. In this scenario, for example, the data access right determining unit 306 may assign a full access right to the client device and allows the client device to access all the data relating to this transaction, but not any data maintained in the network or system. For example, the client device may be partially restricted access right or fully restricted access right for another requested transaction.

The data access right determining unit 306 may maintain one or more classification rules specifying which category an incoming requested transaction belonging to, which may be static or dynamic. The data access right determining unit 306 may determine which category a particular transaction belongs to base on the determined risk metric and the classification rules. The classification rule may be a simply one that map different colors of risk metric to different categories. Similarly, it may indicate different value ranges of the risk metric correspond to different categories. For example, given a risk metric with a minimum value being 0 and maximum value being 10. Then a risk metric value equal to or smaller than 3 may indicate a low risk and therefore be determined as falling in category A. Similarly, a risk metric value equal to or greater than 6 may indicate a high risk and be considered as belonging to category C. Then a risk metric value greater than 3 but smaller than 6 may be determined as indicating a medium risk and therefore falling in category B. In other examples, in addition to the determined risk metric, different weights may also be given to risk metrics determined under different factors, which are considered during the evaluation of the transaction by the evaluating unit 302. For example, failing to meet the security policies of the network, or a high hop count may have a greater weight than other factors. In some other examples, a classification rule may also specify a pre-determined threshold value for a maximum acceptable discrepancy for one or more particular evaluating factors. For example, a classification rule may set a pre-determined maximum hop count threshold value to regulate the largest number of hops that a packet may have. Then if a packet has a hop count greater than the pre-determined maximum hop count threshold value, the rule may specify such packet is a category C transaction no matter how good (e.g., how safety) other risk metric(s) the packet has. In some other examples, the classification rule may specify the maximum number of medium or high-risk metrics a transaction can have, to be considered as a category A and/or B transaction. For example, there may be three (or four or five) different risk metrics indicate that the transaction has a medium or high risk, wherein each risk metric is determined in relation to a different factor. Then a classification rule may specify that, no matter how good other risk metrics this transaction has, it is a category B or C transaction. It is to be understood that the classification rules maintained at the data access right determining unit 306 could be any combination of examples discussed above.

It is to be understood that the classification rules may be more complicated in a practical implementation environment. For example, in the scenario discussed above wherein a legitimate user requests to access the system when he or she is having a business trip or a vocation in another country. As described, the transaction may have a medium risk metric which is determined by the determining unit 304. In this example, a classification rule may give higher weights to other factors, such as the user identity has been verified successfully (*e*.*g*., correct username and password), the request is sent through a VPN, or the same client device is used, or any combination of them. Therefore, although the risk metric may indicate that the transaction should be classified as category B, based on the weights specified by the classification rules, the data access right determining unit 306 may ask the client device to go through a further authentication process to prove that he or she is a legitimate user. Such further authentication process may be executed by the data access right determining unit 306, or by a server which will be described below in conjunction with step 405. If this further authentication process is executed by the data access right determining unit 306 itself, then it may decide which category this transaction should be based on a result of the subsequent authentication. Such further authentication process may involve one or more security questions. For example, requiring the user to input a verification code that he or she receives on the client device or from the registered email, or both. Alternatively, or additionally, some other questions may be asked and thereby to verify whether the user is a legitimate user. Alternatively, the data access right determining unit 306 may classify the transaction as a category B transaction based on the determined risk metric directly.

In some further examples, the risk metric determining unit 304 may determine one overall risk metric based on all the factors have been considered and evaluated by the evaluating unit 302. In this scenario, the risk metric determining unit 304 may take above various scenarios and rules into account when determining such overall risk metric. Then the data access right determining unit 306 may simply determine which category the requested transaction belongs to based on the overall risk metric.

Referring to FIG. 5, as an exemplary scenario, three categories are used at the data access right determining unit 306. However, it is to be understood that more categories may be used by the data access right determining unit 306. More categories may be used to further differentiate the various complicated scenarios, wherein how a client device may be served or responded may be specified in a more detailed way.

At step 405, the directing transaction unit 308 of the network traffic management apparatus 20 may direct the transaction to a server 30 (k) among servers 30(1)-(n). The server 30(k) which receives the request from the client device 10 has the capability to serve back the client device 10. The directing transaction unit 308 may determine a target server who will be responsible to respond to the client device 10, based on the data access right of the transaction determined by the data access right determining unit 306. Additionally, the directing transaction unit 308 may also consider other appropriate routing or load balancing rules executed in the network. Herein, the target server 30(k) may be a physical server, an application entity, an application instance, or a cluster or a bunch or group or set of servers. Because the directing transaction unit 308 may direct a plurality of transactions to different servers (e.g., different sets or clusters of servers) based on the determined data access right, this may also facilitate the general load balancing or routing of the network traffic management system 100. For example, all the transactions classified as category A may be routed to servers of cluster 1 for processing the request. Transactions classified as category B may be routed to servers of cluster 2, wherein servers there may have a lower processing load and therefore may have more redundancy to execute more stringent access policies (which will be described below). Then transactions classified as category C may be routed to trapping server, a trapping application entity, a dynamic application instance or module (e.g., a module in an application server 30 or even in the traffic network management apparatus 20 itself), or a trapping cluster (which will be described below).

At step 406, the server 30(k) to whom the transaction is directed by the directing transaction unit 308, may generate and send a response to the client device 10. At step 407, the response may be forwarded by the network traffic management apparatus 20 to the client device 10. It is to be understood that this network traffic management apparatus 20 may be the same as or different from the network traffic management apparatus 20 directing the transaction to the server 30(k).

As discussed above, for the transactions classified as category B, they may be directed to a specific server or a specific cluster of servers. For those transactions, they may go through a further authentication or verification process as discussed above, between the client device 10 and the specific server. This means such transactions are designed to be inspected with more stringent access policies due to being determined as having a medium risk. The specific server may further decide how to respond to the client device, based on a result of such authentication process. For example, if the client device passes this authentication, then the specific server may decide to serve the client device and allows a full access to the relevant data. Alternatively, if the client device passes this authentication, the specific server may decide to serve the client device still with a partially restricted access right and therefore the client device may only access to non-confidential data. In some examples, if the client device fails to pass the authentication, then the specific server may decide to terminate a connection and drop off the request directly. In some other examples under this scenario, the server may forward the request to a trapping server which will be described below. In this case, the transaction is treated as a category C transaction subsequently. In some examples, the server may serve the client device directly with a partial restricted access right to access merely non-confidential information or the information that the client device is limited to, without conducting the above further authentication process.

In some examples, to serve client devices 10 with a plurality of transactions having different data access rights, data maintained in the network may have different confidential levels. For example, for non-confidential information, it may be accessed by a client device during any transactions if the user is a legitimate user. Confidential information may be accessed only by category A transactions. In some examples, confidential information may be further marked with different confidential levels, such as low, medium, high, or highly sensitive confidential. Then a server may determine whether a client device of a transaction having a partially restricted access right can access the confidential data, and which level(s) of confidential data the client device is allowed to access to. The determination may be based on the evaluation made by the evaluating unit 302, the risk metric determined by the risk metric determining unit 304, the data access right determined by the data access right determining unit 306, or any combination of them. In the example wherein a legitimate user tries to access the server during his or her business trip or vocation from another country, the server may serve the legitimate user with the same data access right as in his/her home country (*e*.*g*., after a further authentication process). Alternatively, the server may limit the data access right of the user and may only allow him/her to access data which is one or more level(s) lower. Alternatively, the server may start another authentication process when the user wants to access more sensitive data (*e*.*g*., higher confidential level data which he/she has the right to access in home country but is limited to access during the trip,) based on an executed policy.

As discussed above, for the transactions that are classified as category C by the data access right determining unit 306, the transaction is directed by the directing transaction unit 308 to a trapping server. Different from other servers among servers 30, the trapping server maintains fake data, which may also be called trapping data. The fake data means it is not actual or real data because it is different from the data maintained by the servers 30 to serve legitimate users. But from other aspects, the trapping data may facially look like real data. For example, the trapping data may maintain user identities, but the users are not real users. As another example, the trapping data may maintain wrong statistical data of an enterprise with the same format as the real one. In response to receiving a transaction having a fully restricted access right from the directing transaction unit 308, the trapping server knows that this transaction is considered as an attacking transaction that sent from an attacker. Then the trapping server may simply drop off the request and terminate or not initiate a transaction. Alternatively, the trapping server may decide to serve the client device, even though it is used by an attacker. Then the trapping server may camouflage a response for the client device with the fake data it maintains and conduct the requested transaction with the client device. In this way, being served with a camouflaged response comprising the fake data, the user (i.e., an attacker) of the client device may not sense that this is a fake reply at all because it looks like a legitimate or real response. Then the user may continue one or more interactions with the trapping server, until complete the transaction. During such interactions, the trapping server may obtain data or information transmitted from the client device. Then the trapping server may record the attacking source (*e*.*g*., IP address) and the user identity. Based on the collected information, the trapping server may analyze an attacking pattern of this transaction. The analysis may relate to, but not limited to, such as the attack surface, access pattern (*e*.*g*., how did the attacker traverse through the application), attack source (*e*.*g*., the original IP address from where the request is sent), the hop count, how the attacker was trying to attack and what parameters was used, how the masking was done, what kind of data was the attacker trying to access or steal, or any information relating to policies (*e*.*g*., security) that the network employs or the factors considered under the evaluations by the evaluating unit 302.

The trapping server may provide the analysis to the evaluating unit 302. Then the analysis may be incorporated into evaluating rules by the evaluating unit 302 or stored by the evaluating unit 203. In this way, the information collected by the trapping server and its analysis may be used for subsequent evaluations for incoming requests of various transactions. In some examples, it is to be understood that the analysis made based on the information collected from an attacking source may be further utilized by other network devices for other purpose. For example, may be used to update a security policy or add a new security policy by a network device. As another example, after figuring out what kind of data (*e*.*g*., a specific column or section) an attacker is trying to access, the server may enhance a protection for the relevant data. For example, as for the particular data, the server may add stringent policies on it, or limit the number of users who are allowed to access the data, or initiate an additional authentication process when a user (*e*.*g*., even a legitimate user) is trying to access the data.

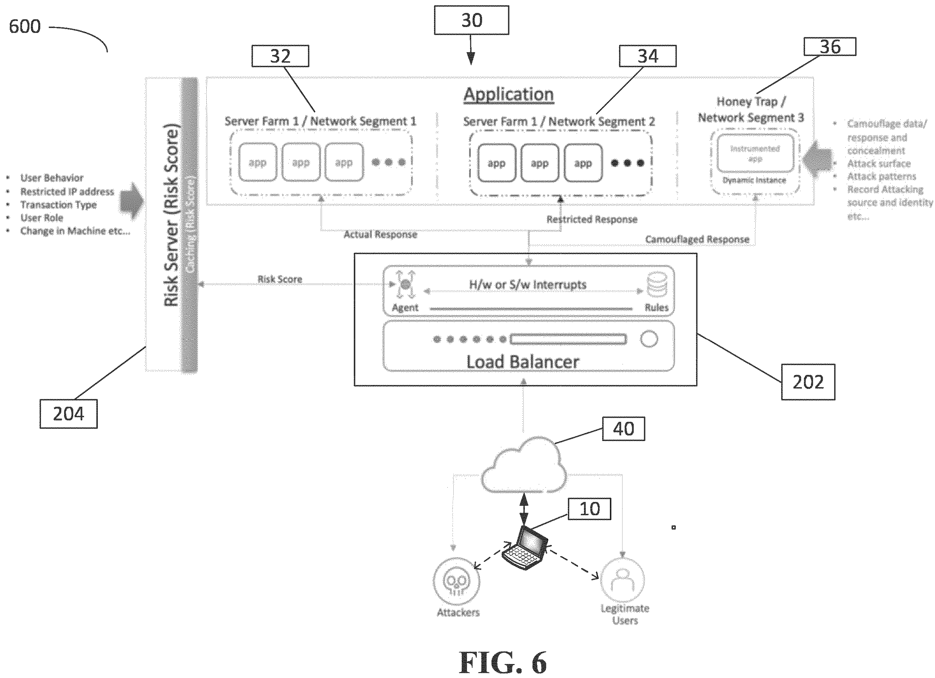

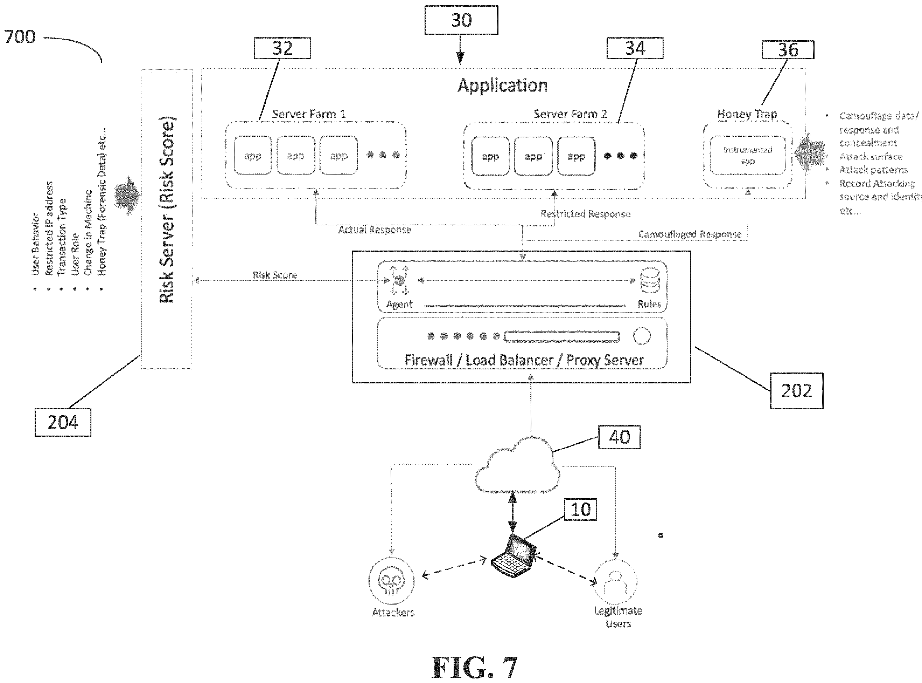

FIG. 6 illustrates an execution environment 600. FIG. 7 illustrates another exemplary execution environment 700. As illustrated in FIGs. 6 and 7, either legitimate users or attackers may send a request via client devices 10 for various transactions to a server 30. The client devices 10 may communicatively connected with the network traffic management apparatus 20 via one or more communication networks 40. Referring to FIGs. 6 and 7, the network traffic apparatus 20 is illustrated as a load balancer 202 and a risk server 204. The load balancer 202 may handle the incoming traffic based on a plurality of rules. Furthermore, load balancer 202 may have a plurality of hardware or software agent or instances to interrupt an incoming request and configure the request go through a security control implemented by a risk server (or instance, module) 204. The hardware or software agent may be a module, an application, or an engine, which may interpret and authenticate the incoming request. The risk server 204 may comprise the various units illustrated in FIG. 3 to perform those operations discussed above. For example, the risk server 204 may evaluate a security risk of a requested transaction. As illustrated in FIG. 6, the evaluation may be made based on a plurality of factors, such as user behavior, restricted IP address, the type of transaction that this client device is requesting for, user (of the client device 10) role, whether the same user used a different client device to send the request, or any combination of them. The restricted IP address means whether the request is sent from an IP address which is restricted or not allowed to conduct the requested transaction by the network environment (*e*.*g*., restricted based on security policies). Furthermore, as illustrated in FIG. 7, it is to be understood that the analysis made by a trapping server based on the information collected from an attacking source, may also be used by the risk server 204 to perform the evaluations. Then for example, an IP address may become a restricted IP address due to an analysis made by a trapping server based on the data collected from an attacking source. In some examples not shown in FIGs. 6 and 7, the load balancer 202 and/or the risk server 204 may have interactions with service providers (*e*.*g*., an access policy manager) or identity providers (*e*.*g*., ADFS, Ping) to execute operations discussed in this disclosure. Then the risk server 204 may determine a risk score as the risk metric for the requested transaction. The risk server 204 may further comprise a caching system to deliver the determined risk score when needed. For example, the risk score may be transmitted to the load balancer 202, in a case wherein some of the units as illustrated in FIG. 3 are located at the risk server 204 while the rest at the load balancer 202. Based on the risk score, the risk server 204 may determine a data access right for the requested transaction. Then the risk server 204 may direct the requested transaction to a server 30 based on the data access right.

Referring to FIGs. 6 and 7, the server 30 is illustrated as clusters or groups of servers. As illustrated in FIGs. 6 and 7, servers 30 may have a server farm 1 at network segment 1 and network segment 2. The server farm 1 may be one or more servers to provide various services, such as providing access to web applications as illustrated in FIGs. 6and 7. It is to be understood that server 30 may comprise more groups of servers and more network segments, or a different topology as illustrated in FIGs. 6 and 7. Moreover, server 30 may further comprise a trapping server at network segment 3, a different network segment as the server farm 1. As discussed above, depending on the determined data access right, a server to whom the requested transaction is directed may serve the client device 10 accordingly. The server may serve an actual response without any limitations on data access, or a restricted response with limited data access right, or a camouflaged response, based on the determined data access right for the transaction. When serving a camouflaged response by a trapping server, the transaction is considered as originated from an attacking source, and features and characters of the attacking may be analyzed through subsequent interactions between the trapping server and the client device 10.

With implementations of all or part of the above discussed operations of a security control on a network traffic management apparatus, the apparatus may detect undesired or malicious network traffic or request before such traffic being forwarded to a server. In this way, the undesired or malicious users may be treated and served differently from the legitimate users. In some examples, the undesired or malicious users may be served by a specific trapping server with a camouflaged response comprising fake data. Then a further analysis of this request and the requested transaction may be performed based on information obtained during the interactions following the camouflaged response. In some examples, during the detection of undesired network traffic, the network traffic management apparatus may classify incoming network traffic into different categories. Then the network traffic management apparatus may direct requests to different servers to serve the requested transaction based on the categories of the requests. Therefore, load on the servers may be optimized accordingly. Also, security policies of the network may be improved or updated based on the interception and further analysis of an undesired network request.

Throughout the specification and claims, terms may have nuanced meanings suggested or implied in context beyond an explicitly stated meaning. It will be further understood that: the term "or" may be inclusive or exclusive unless expressly stated otherwise; the term "set" may comprise zero, one, or two or more elements; the terms "some", "another," and "particular" are used as naming conventions to distinguish elements from each other and does not imply an ordering, timing, or any characteristic of the referenced items unless otherwise specified; the terms "such as", "e.g.," "for example", and the like describe one or more examples but are not limited to the described examples(s); the term "comprises" and/or "comprising" specify the presence of stated features, but do not preclude the presence or addition of one or more other features.

Reference throughout this specification to features, advantages, or similar language does not imply that all of the features and advantages that may be realized with the present solution should be or are included in any single implementation thereof. Rather, language referring to the features and advantages is understood to mean that a specific feature, advantage, or characteristic described in connection with an embodiment is included in at least one embodiment of the present solution. Thus, discussions of the features and advantages, and similar language, throughout the specification may, but do not necessarily, refer to the same embodiment.

Furthermore, the described features, advantages and characteristics of the present solution may be combined in any suitable manner in one or more implementations or examples. One of ordinary skill in the relevant art will recognize, in light of the description herein, that the present solution can be practiced without one or more of the specific features or advantages of a particular implementation or example. In other instances, additional features and advantages may be recognized in certain implementations or examples that may not be present in all implementations of the present disclosure.

## Claims

1. A method for security control, the method implemented by a network traffic management system comprising one or more network traffic management apparatuses, client devices, or server devices, the method comprising:
evaluating a security risk of a transaction;
determining a risk metric for the transaction based on the evaluation;
determining a data access right for the transaction based on the risk metric; and
directing the transaction to a target application entity based on the data access right of the transaction.

2. The method of claim 1, wherein the determining the data access right of the transaction based on the risk metric further comprising:
in response to the risk metric indicating a low risk, assigning a full access right to the transaction;
in response to the risk metric indicating a medium risk, assigning a partially restricted access right to the transaction; and
in response to the risk metric indicating a high risk, assigning a fully restricted access right to the transaction.

3. The method of claim 2, wherein in response to the transaction has a fully restricted access right, the directing the transaction to a target application entity comprising:
determining the transaction as an attacking transaction from an attacking source;
directing the transaction to a trapping application entity to process the transaction, wherein the trapping application entity responds the transaction with trapping data;
obtaining information transmitted from the attacking source during following one or more interactions between the trapping application entity and the attacking source;
recording the attacking source and identity of a user initiating the transaction; and
analyzing an attacking pattern of the transaction based on the captured information.

4. The method of any of claims 1-3, wherein the evaluating the security risk of the transaction comprises:
evaluating the security risk of the transaction based on at least one of the analysis of the attacking pattern, the recorded attacking source, the recorded identity of the user initiating the transaction, a security policy implemented by the network traffic management system, a feature of the transaction, or a behavior of the user initiating the transaction.

5. The method of claim 2, wherein, in response to the transaction having a partially restricted access right, directing the transaction to the target application entity with a lower processing load.

6. An apparatus for security control, comprising memory comprising programmed instructions stored in the memory and one or more processors configured to be capable of executing the programmed instructions stored in the memory to:
evaluate a security risk of a transaction;
determine a risk metric for the transaction based on the evaluation;
determine a data access right for the transaction based on the risk metric; and
direct the transaction to a target application entity based on the data access right of the transaction.

7. The apparatus of claim 6, wherein the determine the data access right of the transaction based on the risk metric further comprising:
in response to the risk metric indicating a low risk, assign a full access right to the transaction;
in response to the risk metric indicating a medium risk, assign a partially restricted access right to the transaction; and
in response to the risk metric indicating a high risk, assign a fully restricted access right to the transaction.

8. The apparatus of claim 7, wherein in response to the transaction has a fully restricted access right, direct the transaction to a target application entity comprising:
determine the transaction as an attacking transaction from an attacking source;
direct the transaction to a trapping application entity to process the transaction, wherein the trapping application entity responds the transaction with trapping data;
obtain information transmitted from the attacking source during following one or more interactions between the trapping application entity and the attacking source;
record the attacking source and identity of a user initiating the transaction; and
analyze an attacking pattern of the transaction based on the captured information.

9. The apparatus of any of claims 6-8, wherein the evaluate the security risk of the transaction comprising:
evaluate the security risk of the transaction based on at least one of the analysis of the attacking pattern, the recorded attacking source, the recorded identity of the user initiating the transaction, an implemented security policy, a feature of the transaction, or a behavior of the user initiating the transaction.

10. The apparatus of claim 7, wherein the one or more processors are further configured to, in response to the transaction having a partially restricted access right, direct the transaction to the target application entity with a lower processing load.

11. A network traffic management system, comprising one or more traffic management apparatuses, server devices, or client devices, the network traffic management system comprising memory comprising programmed instructions stored thereon and one or more processors configured to be capable of executing the stored programmed instructions to:
evaluate a security risk of a transaction;
determine a risk metric for the transaction based on the evaluation;
determine a data access right for the transaction based on the risk metric; and
direct the transaction to a target application entity based on the data access right of the transaction.

12. The network traffic management system of claim 11, wherein the determine the data access right of the transaction based on the risk metric further comprising:
in response to the risk metric indicating a low risk, assign a full access right to the transaction;
in response to the risk metric indicating a medium risk, assign a partially restricted access right to the transaction; and
in response to the risk metric indicating a high risk, assign a fully restricted access right to the transaction.

13. The network traffic management system of claim 12, wherein in response to the transaction has a fully restricted access right, direct the transaction to a target application entity comprising:
determine the transaction as an attacking transaction from an attacking source;
direct the transaction to a trapping application entity to process the transaction, wherein the trapping application entity responds the transaction with trapping data;
obtain information transmitted from the attacking source during following one or more interactions between the trapping application entity and the attacking source;
record the attacking source and identity of a user initiating the transaction; and
analyze an attacking pattern of the transaction based on the captured information.

14. The network traffic management system of any of claims 11-13, wherein the evaluate the security risk of the transaction comprising:
evaluate the security risk of the transaction based on at least one of the analysis of the attacking pattern, the recorded attacking source, the recorded identity of the user initiating the transaction, a security policy implemented by the network traffic management system, a feature of the transaction, or a behavior of the user initiating the transaction.

15. The network traffic management system of claim 12, wherein the one or more processors are further configured to, in response to the transaction having a partially restricted access right, direct the transaction to the target application entity with a lower processing load.
